# EUROPEAN PATENT APPLICATION

(11) **EP 0 952 073 A2**
(43) Date of publication of application: **27.10.1999**
(21) Application number: 99303097.2
(22) Date of filing: 21.04.1999
(51) Int. Cl.: B62J 6/00

(54) **Bicycle light**

(30) Priority: 22.04.1998 GB 9808625
(71) Applicant: Davies, Tudor Edward, London W13 9PW (GB)
(72) Inventor: Davies, Tudor Edward, London W13 9PW (GB)
(74) Representative: Burrington, Alan Graham Headford

(57) **Abstract**

A bicycle light that, when mounted on a bicycle has a dual function of illuminating the body of the cyclist and also the road ahead. A light reflective material may be worn on the torso of the cyclist. The first beam of light 7 radiates from enclosure 4 to produce a sufficiently directed beam of light to shine on the torso of the cyclist avoiding shining in the eyes of the cyclist. The same beam of light 7 may have its angle of illumination adjusted by means of moving enclosure 4 in a vertical plane on pivot point 5, in order to adjust the desired area of illumination away from the face of the cyclist. The second beam of light 8 radiates from enclosure 1 in a direction to illuminate the road ahead. The invention may be adapted to be mounted behind the cyclist to illuminate the rear of the torso and to radiate a red second beam.

## Description

This invention relates to a bicycle light. In particular this invention relates to a bicycle light mounted on a bicycle.

Bicycle lights were first used to illuminate the road ahead. However, with an ever increasing number of vehicles on the road, the effectiveness of the primary purpose of the traditional bicycle light is being reduced by street lighting and, in particular, the increasingly powerful headlights of cars and motorbikes. As a result, the area of road illuminated by the traditional bicycle light becomes lost amongst the other illumination from traffic containing higher powered light sources. The reflective strips or jacket worn by cyclists was a major breakthrough in road safety but relies on reflection from a source of light, usually a car, in the general direction of an approaching vehicle to alert the driver. Unfortunately, car headlights are designed to shine downwards towards the road so as to not blind any oncoming motorists or cyclists. This means cyclists are relying on being illuminated by secondary illumination intended for other purposes.

The solution is to provide the bicycle with an independent source of light that illuminates the rider therefore increasing the visibility of the cyclist to other road users.

According to the present invention there is provided a bicycle light that in use, emits a first beam of light directed upwards by a first means so as to illuminate the torso of the cyclist. A second beam of light could also be provided to emit a beam of light directed away from the cyclist. These two beams of light could be produced from within the same unit and mounted on the bicycle by means of a clamp. The first beam of light may be capable of having its angle of illumination adjusted to allow for cyclists of different heights and riding positions so that the light does not shine into the eyes of the cyclist. The first beam of light is preferably of a controlled angle so that only the torso is illuminated. No light should cause distress if the cyclist looks down whilst riding. The first, and or second, beam of light may also be capable of flashing intermittently as to increase the rider's visibility to other road users, particularly if the cyclist is wearing reflective material. The end result being a bicycle light that, when mounted on the bicycle, is capable of illuminating the front or rear of the torso of the cyclist as well as towards the road ahead or behind.

The term "torso" when applied to a light mounted to the rear of the cyclist may include the head and helmet of the cyclist, provided the light does not shine directly in to the eyes of the cyclist to cause distress when looking rearward.

According to a second aspect of the invention, a bicycle light includes a housing, containing a number of light sources, and a power source, which housing is attached to a clamp means for adjustably securing the bicycle light to a bicycle, said housing having a first beam directing shroud means for directing the first beam onto the torso of the cyclist.

The light source for illuminating the torso may be one or more white light emitting semi-conductor Light Emitting Diodes (LEDs). Alternatively, instead of a cluster of white light LEDs they may be replaced by Red, Green and Blue light emitting LEDs arranged to provide substantially white light in combination on the torso of the cyclist. The advantage of coloured LEDs is that any stray light that may be directed from an LED toward other road users will not be confused with a cycle headlight.

A specific embodiment of the invention will now be described by way of example with reference to the accompanying drawing in which:-

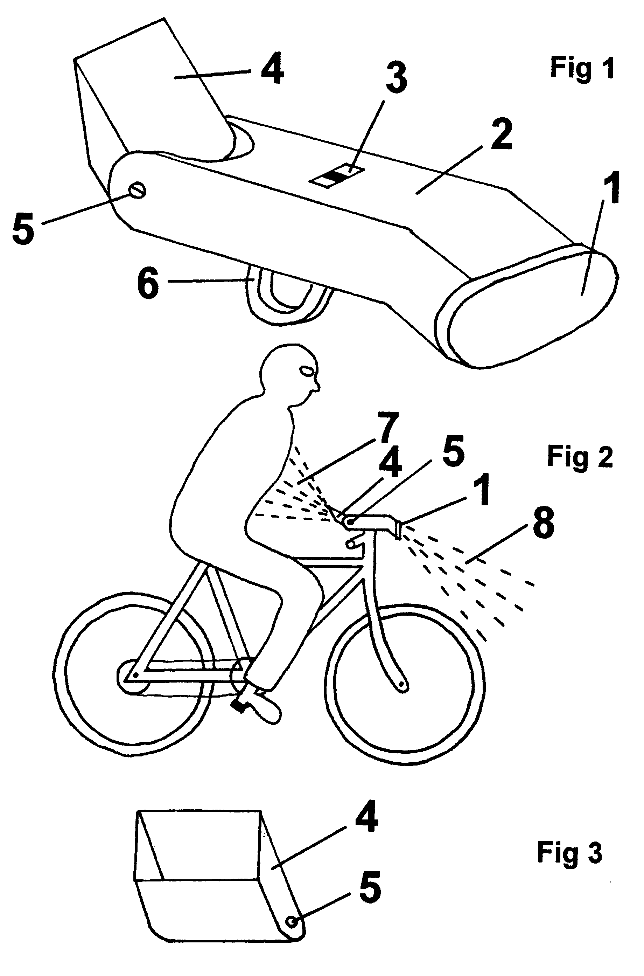

Figure 1 shows in perspective the bicycle light.

Figure 2 shows in plan view the bicycle and cyclist with the light in operation.

Figure 3 illustrates the hood assembly that may be used to direct the first beam of light.

Referring to the drawing, the bicycle light comprises two light assemblies, the first beam of light 7 produced from a lamp or other light source within hood 4, and the second beam of light 8 produced from light assembly 1. The body or housing of the bicycle light 2 contains the appropriate batteries and switches 3.

The unit is preferably attached to the handlebar by means of a clamp 6. The hood 4 is capable of angular adjustment in a vertical plane, on the pivot point 5. The narrow angle beam of light desired 7 may be obtained by placing a radiating light source deep within hood 4, aligned with the pivot point 5.

The source of light may be a lamp or an LED. White light producing LEDs are now available with a lens that creates a narrow focused beam that does not require to be shrouded by the rim of the hood to direct the beam onto the torso of the cyclist and away from the eyes of the cyclist. The LEDs may be clustered and arranged to be driven intermittently or, preferably continuously. Alternatively, if it is a National Traffic law that no white light should be emitted to the rear of a vehicle, except when reversing, the cluster of LEDs may consist of LEDs that emit red light, green light and blue light, which in combination provide white light on the torso of the cyclist.

It will be appreciated that the desired result of illuminating both the cyclist and the road ahead could be achieved by other embodiments. For example, both light beams could be produced from a single light source, so that the first light beam is reflected back onto the cyclist by a mirror placed partly in the traditional main beam. It will be appreciated that the first and second light beams may be produced separately in independent units. This would permit the first light beam unit to be mounted separately on the bicycle with a traditional second beam bicycle light unit mounted in a traditional manner. Therefore the first beam of light and an independently controlled and adjusted second beam of light can be set to the cyclist' requirements.

The arrangement according to the invention may be adapted to shine upwardly onto the rear of the cyclist. The modified arrangement provides a beam of red light shining to the rear of the cycle and a beam of white light onto the rear profile of the cyclist.

The present invention can include any one or more of the following features:
a. the first beam is directed onto the front of the torso of the cyclist;
b. the first beam is directed onto the rear of the torso of the cyclist;
c. the first beam of light is produced from a first light source and the second beam of light is produced from a second light source;
d. the first and or second beam is arranged in use to flash intermittently;
e. the intensity of the second beam of light may be adjusted;
f. the bicycle light includes a housing containing a number of light sources, and a power source, which housing is attached to a clamp means for adjustably securing the bicycle light to a bicycle, said housing having a first beam directing shroud means for directing the first beam onto the torso of the cyclist;
g. the source of the first beam of light consists of a number of Light Emitting Diodes (LEDs);
h. The number of LEDs include LEDs for emitting red light, LEDs for emitting green light, and LEDs for emitting blue light.

## Claims

1. A bicycle light including first means for directing a first beam of light so that in use the first beam is directed upwards to illuminate the cyclist.

2. A bicycle light as claimed in claim 1 wherein that first beam of light is directed so as to shine only onto the torso of the cyclist.

3. A bicycle light as claimed in claim 1 or claim 2 wherein the first means is adjustable to direct the first beam in a vertical plane to illuminate cyclists of different heights and riding positions.

4. A bicycle light as claimed in any preceding claim in which a power source is provided within the bicycle light.

5. A bicycle light as claimed in any preceding claim in which the first beam of light is reflected back onto the cyclist.

6. A bicycle light as claimed in any preceding claim in which an adjustable clamp means is provided for securing the bicycle light to the bicycle.

7. A bicycle light as claimed in any preceding claim wherein the intensity of the first beam of light may be adjusted.

8. A bicycle light as claimed in any preceding claim wherein the first beam of light is arranged to flash intermittently.

9. A bicycle light as claimed in any preceding claim in which second means is provided for directing a second beam towards approaching vehicles.

10. A bicycle light as claimed in claim 9 in which a second means is provided for adjusting the direction of the second beam of light.
